# EUROPÄISCHE PATENTSCHRIFT

(11) **EP 1 379 423 B1**
(45) Veröffentlichungstag und Bekanntmachung des Hinweises auf die Patenterteilung: **17.11.2004**
(21) Anmeldenummer: 02761907.1
(22) Anmeldetag: 10.04.2002
(51) Int. Cl.: B62D 5/04, B62D 6/00, F16H 1/28

(54) **BETÄTIGUNGSEINRICHTUNG FÜR EINE FAHRZEUG-LENKEINRICHTUNG**
ACTUATING DEVICE FOR A VEHICLE STEERING SYSTEM
SYSTEME D'ACTIONNEMENT POUR MECANISME DE DIRECTION D'UN VEHICULE

(30) Priorität: 14.04.2001 DE 10118663
(43) Veröffentlichungstag der Anmeldung: 14.01.2004
(73) Patentinhaber: ZF Lenksysteme GmbH, 73527 Schwäbisch Gmünd (DE)
(72) Erfinder: HÖRSCH, Jürgen, 74417 Gschwend (DE); GEISER, Michael-Horst, 73527 Schwäbisch Gmünd (DE)
(86) Internationale Anmeldenummer: PCT/EP2002/003967
(87) Internationale Veröffentlichungsnummer: WO 2002/083479

(56) Entgegenhaltungen:
- EP-A- 0 229 958
- WO-A-01/49553
- DE-A- 3 225 950
- DE-A- 4 326 355
- US-A- 3 143 899
- US-A- 4 043 210
- PATENT ABSTRACTS OF JAPAN vol. 009, no. 279 (M-427), 7. November 1985 (1985-11-07) -& JP 60 121350 A (FUJI KIKAI), 28. Juni 1985 (1985-06-28)

## Beschreibung

Die Erfindung betrifft eine Betätigungseinrichtung für eine Fahrzeug - Lenkeinrichtung, nach dem Oberbegriff des Patentanspruches 1.

Eine solche Einrichtung ist aus der JP 60-121350 A bekannt.

Bekannt sind Betätigungseinrichtungen für Fahrzeug - Lenkeinrichtungen, die der überlagerten Drehwinkelübertragung von zwei Getriebeeingängen dienen. Während der eine Getriebeeingang von einem Lenkhandrad und der andere von einem Motor beaufschlagt wird, ist der Getriebeausgang mit dem Lenkgetriebe verbundenen. Die Betätigungseinrichtung ist als Planetenradgetriebe ausgebildet, welches aus in einem Planetenträger gehaltenen Stufenplaneten besteht, dessen Planetenräder jeweils starr miteinander verbunden sind und im ständigen verzahnten Eingriff mit zwei Sonnenrädern stehen von denen eines mit dem ersten Getriebeeingang verbunden ist während das andere dem Getriebeausgang zugeordnet ist. Als zweiter Getriebeeingang dient eine mit dem Motor wirkungsmäßig verbundene Schnecke, die ein mit dem Planetenträger verbundenes Schneckenrad kämmt.

Bei Zahnradgetrieben, wie auch bei mit Zahnrädern betriebenen Betätigungseinrichtungen, treten herstellungsbedingte Toleranzen, wie Zahndickenabmaß, Flankenformfehler, Rundlauffehler, Teilungsfehler und Achsabstandsabweichungen auf. Um ein Klemmen der Getrieberäder zu vermeiden, muß zwischen den Flanken daher stets ein Spiel vorhanden sein. Dieses Zahnflankenspiel ist bei Anwendungen, wie der Betätigungseinrichtung für Fahrzeug - Lenkvorrichtungen störend, da dort bis zu einem definierten Moment eine Spielfreiheit in beide Drehrichtungen erforderlich ist.

Ein Planetenzahnradgetriebe mit Mitteln zur Beseitigung des störenden Zahnflankenspiels ist in der DE 197 57 433 A1 beschrieben. Dieses Planetenzahnradgetriebe weist ein Hohlrad, ein Ritzel und einen Umlaufträger mit gleichzeitig in dem Hohlrad und dem Ritzel kämmenden Planetenrädern auf. Von ihrer Breite her sind Hohlrad und Ritzel jeweils größer als die Breite des mit ihnen im Eingriff stehenden Planetenrades. Diese überschüssige Breite ist dem kämmenden Planetenrad jeweils so zugeordnet, daß sie jeweils auf einer Seite des Planetenrades übersteht. Dabei überragt das Ritzel eine Stirnseite des Planetenrades, die derjenigen gegenüberliegt, an der die überschüssige Breite des Hohlrades das Planetenrad überragt. Auf beiden Stirnseiten des Planetenrades ist ein achsgleich mit dem Planetenrad drehbares Zusatzzahnrad, welches jeweils gegenüber dem Planetenrad drehelastisch verspannt ist, gelagert. Durch die vorstehend beschriebene Zahnbreiten-Ausbildung ist es möglich, daß von den Zusatzzahnrädern eines allein mit dem Ritzel und das andere allein mit dem Hohlrad in einem verzahnten Eingriff steht, so daß ein Zusatzzahnrad als radial innen spannendes, während das andere als radial außen spannendes Zusatzzahnrad wirkt.

Diese Lösung erfordert einen verhältnismäßig hohen Bauaufwand, bei den speziellen Zusatzzahnrädern und deren Anordnung zu der Zahnbreiten-Ausbildung von Ritzel und Hohlrad des Planetenradgetriebes.

Weiterhin sind Planetenradgetriebe bekannt bei denen mindestens die Lagerzapfen eines Stufenplaneten radial beweglich in Langlöchern geführt und mittels Bügelfedern gegen die Sonnenräder verspannt werden. Die so geführten Stufenplaneten weisen zu der angestrebten radialen Beweglichkeit in den Langlöchern ein die tangentiale Steifigkeit beeinflussendes Spiel auf und die mit diesen Langlöchern in Wirkzusammenhang stehenden Bügelfedern neigen zur Streuung der Anfederkraft, die sich außerdem, über die Lebensdauer der Bügelfedern gesehen, durch die Federermüdung verringert. Ferner schränken die zusätzlichen Führungselemente der Lagerzapfen in den Langlöchern den zur Verfügung stehenden Platzbedarf ein.

Der im Patentanspruch 1 angegebenen Lösung liegt das Problem zugrunde, ein spielfreies Planetenradgetriebe der eingangs angegebenen Art zu konzipieren, bei welchem die Spielfreiheit durch betriebssichere und baulich einfache Mittel, mit hoher tangentialer Steifigkeit, hoher Dauerbeständigkeit bei definierter Vorspannkraft, realisiert wird. Das Problem wird durch die im kennzeichnenden Teil des Patentanspruches 1 aufgeführten Merkmale gelöst.

Die mit der Erfindung erzielten Vorteile bestehen insbesondere darin, daß mit dem elastischen Hebelarm ein kleinbauendes Mittel zum Spielausgleich geschaffen wird, bei dem Fertigungstoleranzen und Zahnflankenspiel, trotz erreichbarer hoher Lebensdauer, zu vernachlässigen sind.
Vorteilhafte Weiterbildungen der Erfindung sind in den abhängigen Ansprüchen angegeben.

Ein Ausführungsbeispiele der Erfindung ist in der Zeichnung dargestellt und im folgenden näher erläutert. Es zeigen:

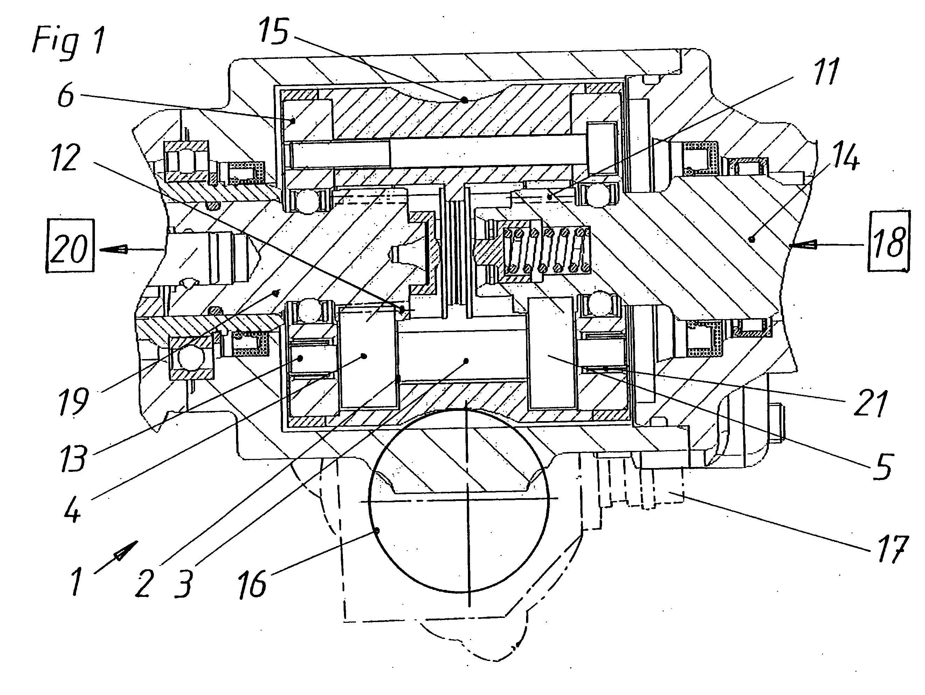

- Fig. 1: ein spielfreies Planetenradgetriebe als Betätigungseinrichtung für eine Fahrzeug - Lenkeinrichtung im Längsschnitt;

In der Zeichnung ist ein Planetenradgetriebe 1 mit mehreren Stufenplaneten 2 als Betätigungseinrichtung für eine Fahrzeug - Lenkeinrichtung dargestellt. Diese Stufenplaneten 2 sind, wie aus Fig.1 erkennbar, in der Trägerplatte des Planetenträgers 6 durch Wälzlager 21 gehalten und weisen jeweils zwei Planetenräder 4 und 5 auf, die paarweise durch eine Welle 3 starr verbunden sind. Die Planetenräder 4 und 5 der Stufenplaneten 2 stehen im ständigen verzahnten Eingriff mit zwei Sonnenrädern 11 und 12. Der über die Lenkhandhabe 18 wirkende Getriebeeingang 14 ist mit dem ersten Sonnenrad 11 verbunden, während das zweite Sonnenrad 12 dem Getriebeausgang 19 zugeordnet ist. Der zweite Getriebeeingang 15 und 16, hier als Schnecke 15 und Schneckenrad 16 ausgeführt, wird über einen Stellmotor 17 aktiviert. Die Lenkhandhabe 18 sowie das Lenkgetriebe 20 sind nur symbolisch als Blöcke dargestellt.

In den zwei Trägerplatten des Planetenträgers 6 sind Hebel angeordnet, die einerseits spielfrei mittels vorgespannter Wälzkörper in den Trägerplatten gelagert und über Federn kraftbeaufschlagt sind und andererseits Lager 21 zur Aufnahme der Zapfen 13 eines Stufenplaneten 2 aufweisen. Die Hebel sind derart in den Trägerplatten des Planetenträgers 6 angeordnet, daß ihre Auslenkung nahezu rechtwinklig zur Verbindungslinie Drehpunkt Hebel - Drehpunkt Stufenplanet 2 erfolgt, wodurch die Planetenachse des in den Lagern 21 gelagerten Stufenplaneten 2 annähernd radial verschiebbar ist. Jeder Hebel ist als ein- bzw. zweiseitiger Hebel ausgebildet, d. h. die Lagerung 21 des jeweiligen Stufenplanetenzapfens 13 und die Feder sind einseitig beabstandet von der Lagerung des Hebels angeordnet oder diese Lagerung befindet sich zwischen Angriffspunkt der Feder und der Lagerung 21 des Stufenplaneten 2. Die den Hebel kraftbeaufschlagende Feder stützt sich am Planetengetriebe 1 verschließenden Deckel ab. Andererseits ist ein Abstützen der Feder auch am verlängernden Zentrierbund des Schneckenrades 16 bzw. am Gehäuse des Planetenträgers 6 oder anderen mit diesem verbundenen Bauteilen möglich. Die zum Lager des Hebels beabstandete Feder ist je nach Ausführung des Hebels druck- bzw. zugbeaufschlagt ausgeführt, jedoch besteht die Möglichkeit eine als Drehfeder wirkende Feder direkt im Drehpunkt des Hebels zu installieren. Die auf beiden Seiten des Stufenplaneten 2 integrierten federbelasteten Hebel wirken derart auf diesen Stufenplaneten 2, daß sich seine Planetenräder 4 und 5 in ihrer geometrischen Ideallage an die Sonnenräder 11, 12 anlegen.

Statt nur einen Stufenplaneten 2 über vorgespannte Hebel mit einer radial wirkenden Kraft zu beaufschlagen können auch mehrere oder alle Stufenplaneten 2 der Betätigungseinrichtung mit derartigen hebelgelagerten Zapfen 13 ausgestattet werden.

Funktionell wird bei dieser Betätigungseinrichtung für eine Fahrzeug - Lenkeinrichtung der vom Fahrer in die Lenkhandhabe 18 eingeleitete Drehwinkel über den ersten Getriebeeingang 14 und das Sonnenrad 11 eingeleitet. Ein mit dem zweiten Sonnenrad 12 drehfest verbundener Getriebeausgang 19 ist über das Lenkgetriebe 20 mit den lenkbaren Fahrzeugrädern verbunden. Eine nicht dargestellte Regeleinheit, die über Sensoren die Verstellung des Lenkwinkels und ggf. andere die Lenkcharakteristik beeinflussende Kennwerte erfaßt, aktiviert den Stellmotor 17, der auf den zweiten Getriebeeingang 15 und 16 und damit auf den Planetenträger 6 wirkt. Das Übersetzungsverhältnis zwischen dem Getriebeeingang 14 und dem Getriebeausgang 19 wird nun durch die Drehrichtung und die Drehgeschwindigkeit des Stellmotors 17 durch die Überlagerung des über die Lenkhandhabe 18 eingeleiteten Drehwinkels, bestimmt.

Ein Planetenradgetriebe 1 mit der beschriebenen Funktionalität kann auch derart ausgebildet sein, daß die Planetenräder 4 und 5 des Stufenplaneten 2 in zwei Hohlräder oder in ein Hohlrad und ein Sonnenrad 11 oder 12 eingreifen. Ebenso ist das Funktionsprinzip auf zusammengesetzte Planetenradgetriebe 1 anwendbar.

Dieses beschriebene Planetenradgetriebe 1 kann auch ohne zweiten Getriebeeingang 15 und 16 ausgeführt sein. Die Stufenplaneten 2 ermöglichen hierbei je nach Art der Getriebestufung eine Eingangsdrehzahl bei geräuscharmen Lauf spielfrei in beide Drehrichtungen zu reduzieren oder zu erhöhen. Diese Ausführung eröffnet die Anwendung des Planetenradgetriebes 1 in allen Bereichen des Maschinen- bzw. Fahrzeugbaus, in denen ab- bzw. hochgestufte Drehzahlen benötigt werden.

## Patentansprüche

1. Betätigungseinrichtung für eine Fahrzeug - Lenkeinrichtung, mit folgenden Merkmalen:
- in einem Planetenträger eines als Betätigungseinrichtung für Fahrzeug - Lenkeinrichtungen dienenden Planetenradgetriebes ist/sind ein oder mehrere Stufenplanet(en) angeordnet,
- die jeweils zwei miteinander verbundenen Planetenräder des/der Stufenplaneten stehen im ständigen Eingriff mit anderen Zahnrädern des Planetenradgetriebes,
- die anderen Zahnräder des Planetenradgetriebes sind mit Innen- bzw. Außenverzahnung ausgestattet, **gekennzeichnet durch** folgende Merkmale:
- in/an den Trägerplatten des Planetenträgers (6) sind schwenkbar gelagerte und mittels Federn kraftbeaufschlagte Hebel integriert,
- die Hebel weisen Lager (21) zur Aufnahme der Zapfen (13) eines Stufenplaneten (2) auf,
- die Lagerung der Hebel erfolgt spielfrei in/an den Trägerplatten des Stufenplaneten (6) mit vorgespannten Wälzkörpern.

2. Betätigungseinrichtung für eine Fahrzeug - Lenkeinrichtung nach Anspruch 1, **dadurch gekennzeichnet, daß** die Hebel derart angeordnet sind, daß ihre Auslenkung nahezu rechtwinklig zur Verbindungslinie Drehpunkt Hebel - Drehpunkt Stufenplanet (2) erfolgt, wodurch die Planetenachsen der in den Hebeln gelagerten Stufenplaneten (2) annähernd radial verschiebbar sind.

3. Betätigungseinrichtung für eine Fahrzeug - Lenkeinrichtung nach einem der Ansprüche 1 oder 2, **dadurch gekennzeichnet, daß** die jeweils den Hebel kraftbeaufschlagende Feder sich am Gehäuse des Planetenträgers (6) oder an anderen fest mit diesem verbundenen Bauteilen abstützt.

4. Betätigungseinrichtung für eine Fahrzeug - Lenkeinrichtung nach einem der Ansprüche 1 bis 3, **dadurch gekennzeichnet, daß** der/die Hebel als ein- oder zweiseitiger Hebel ausgeführt ist/sind.

5. Betätigungseinrichtung für eine Fahrzeug - Lenkeinrichtung nach einem der Ansprüche 1 bis 4, **dadurch gekennzeichnet, daß** die Kraftbeaufschlagung jedes Hebels mittels einer im Lager integrierten Drehfeder erfolgt.

## Claims

1. Actuating device for a vehicle steering system, with the following features:
- a stepped planet or a plurality of stepped planets is or are arranged in a planet carrier of an epicyclic gear serving as an actuating device for vehicle steering systems,
- the in each case two interconnected planet wheels of the stepped planet or stepped planets are in constant engagement with other gear wheels of the epicyclic gear,
- the other gear wheels of the epicyclic gear are equipped with internal or external toothing, **characterized by** the following features:
- pivotably mounted levers acted upon with force by means of springs are integrated in or on the carrier plates of the planet carrier (6),
- the levers have bearings (21) for receiving the journals (13) of a stepped planet (2),
- the mounting of the levers takes place in a play-free manner in or on the carrier plates of the stepped planet (6) by means of prestressed rolling bodies.

2. Actuating device for a vehicle steering system according to Claim 1, **characterized in that** the levers are arranged in such a way that their deflection takes place virtually at right angles to the connecting line between the center of rotation of the lever and the center of rotation of the stepped planet (2), with the result that the planet axes of the stepped planets (2) mounted in the levers are displaceable approximately radially.

3. Actuating device for a vehicle steering system as claimed in one of Claims 1 or 2, **characterized in that** the spring which is in each case acting with force upon the lever is supported on the housing of the planet carrier (6) or on other components connected fixedly to this.

4. Actuating device for a vehicle steering system as claimed in one of Claims 1 to 3, **characterized in that** the lever or levers is or are designed as a one-sided or two-sided lever.

5. Actuating device for a vehicle steering system as claimed in one of Claims 1 to 4, **characterized in that** each lever is acted upon with force by means of a torsion spring integrated in the bearing.

## Revendications

1. Système d'actionnement pour un mécanisme de direction d'un véhicule, comprenant les caractéristiques suivantes :
- on prévoit dans un support planétaire d'un engrenage à roues planétaires servant de système d'actionnement pour des mécanismes de direction pour véhicule, un ou plusieurs planétaire(s) étagé(s),
- les deux roues planétaires connectées respectivement l'une à l'autre du ou des planétaire(s) étagé(s) sont en engagement constant avec les autres roues dentées de l'engrenage à roues planétaires,
- les autres roues dentées de l'engrenage à roues planétaires sont munies d'une denture intérieure ou extérieure, **caractérisé par** les caractéristiques suivantes :
- dans ou sur les plaques support du support planétaire (6) sont intégrés des leviers montés à pivotement et sollicités par force au moyen de ressorts,
- les leviers présentent des paliers (21) pour recevoir les tourillons (13) d'un planétaire étagé (2),
- le support sur palier des leviers s'effectue sans jeu dans/sur les plaques de support du planétaire étagé (6) avec des corps de roulement précontraints.

2. Système d'actionnement pour un mécanisme de direction d'un véhicule selon la revendication 1, **caractérisé en ce que** les leviers sont disposés de telle sorte que leur déviation s'effectue pratiquement à angle droit par rapport à la ligne de connexion entre le pivot du levier et le pivot du planétaire étagé (2), ce par quoi les axes planétaires des planétaires étagés (2) montés dans les leviers sont déplaçables de manière approximativement radiale.

3. Système d'actionnement pour un mécanisme de direction d'un véhicule selon l'une quelconque des revendications 1 ou 2, **caractérisé en ce que** le ressort sollicitant par force à chaque fois les leviers s'appuie sur le carter du support planétaire (6) ou sur d'autres composants connectés fixement à celui-ci.

4. Système d'actionnement pour un mécanisme de direction d'un véhicule selon l'une quelconque des revendications 1 à 3, **caractérisé en ce que** le/les levier(s) est/sont réalisé(s) sous forme de levier unilatéral ou bilatéral.

5. Système d'actionnement pour un mécanisme de direction d'un véhicule selon l'une quelconque des revendications 1 à 4, **caractérisé en ce que** la sollicitation par force de chaque levier s'effectue au moyen d'un ressort de torsion intégré dans le palier.
